# EUROPÄISCHE PATENTANMELDUNG

(11) **EP 3 859 469 A1**
(43) Veröffentlichungstag der Anmeldung: **04.08.2021**
(21) Anmeldenummer: 20020045.9
(22) Anmeldetag: 28.01.2020
(51) Int. Cl.: G05B 19/418, G06Q 10/04

(54) **SYSTEM ZUR GLOBALEN LÖSUNG EINES EREIGNISABHÄNGIGEN MULTIKRITERIELLEN, NICHT-KONVEXEN OPTIMIERUNGSPROBLEMS**

(71) Anmelder: Kisters AG, 52076 Aachen (DE)
(72) Erfinder: Baayen, Jorn Huibregt, 6361 GM Nuth (NL)
(74) Vertreter: Kayser, Christoph

(57) **Zusammenfassung**

Ein System zur Lösung eines ereignisabhängigen multikriteriellen Optimierungsproblems wenigstens eines cyber-physischen Systems mit einer Steuereinrichtung zum Steuern des wenigstens einen cyber-physischen Systems, wobei die Steuereinrichtung das cyber-physische System in Abhängigkeit von einer Liste priorisierter Ziele unter Lösung wenigstens eines ereignisabhängigen Teiloptimierungsproblems steuert, ist dadurch gekennzeichnet, dass jedes Ziel aus der Liste priorisierter Ziele als Zielfunktion erfasst wird, wobei jede Zielfunkton aus wenigstens zwei Teilen besteht, von denen ein erster Teil ein direktes Erfassen des Zieles betrifft und ein zweiter Teil eine Bedingung beschreibt, unter der jedes Ergebnis einer der vorhergehenden Ziele jedes der vorhergehenden Teiloptimierungsprobleme im Wesentlichen nicht negativ beeinflusst wird.

## Beschreibung

Die vorliegende Erfindung betrifft ein System zur Lösung eines ereignisabhängigen, multikriteriellen Optimierungsproblems wenigstens eines cyber-physischen Systems mit einer Steuereinrichtung zum Steuern des wenigstens einen cyber-physischen Systems, wobei die Steuereinrichtung das cyber-physische System in Abhängigkeit von einer Liste priorisierter Ziele unter Lösung wenigstens eines ereignisabhängigen Teiloptimierungsproblems steuert.

Solche Systeme sind im Grunde allgemein bekannt und werden in cyber-physischen Systemen bereits eingesetzt. Der Begriff "cyber-physisches System" bezeichnet mit dem Wortbestandteil "cyber" ein Steuersystem aus einem Verbund informatischer, softwaretechnischer Komponenten mit mechanischen und elektronischen Teilen, die über eine Dateninfrastruktur kommunizieren, und mit dem Wortbestandteil "physisch" das physische System, das durch das Steuersystem gesteuert wird und z.B. ein Flusssystem oder ein Straßennetz sein kann. Ein Beispiel für ein Ereignis, das ein solches cyber-physisches System beeinflusst, sind Niederschläge oder Schneeschmelzen und deren Auswirkungen auf Wassereinzugsgebiete mit Flussläufen, Kanälen, Rückhaltebecken, Stauseen, Überschwemmungszonen etc. aber auch Abwässer aus Kläranlagen, Industriebetrieben und Haushalten. In diesem Beispiel umfasst ein cyber-physisches System zum Beispiel Bauwerke zum Regulieren der Wassermengen und auch die vorgenannten Wassereintrags- und - Führungssysteme. Eine Steuerung der Bauwerke erfolgt wiederum in Abhängigkeit sehr vieler Variablen, wie u.a. dem Wasserdurchsatz, der Breite und Tiefe der Flussläufe, der Aufnahmekapazität von Auffangbecken, etc. sowie der Wasserstände oder -drücke in Rohrsystemen. Die vorrausschauende Steuerung der entsprechenden Bauwerke des cyber-physischen Systems führt dazu, dass stromaufwärts und/oder stromabwärts ein Ziel eingehalten wird. Dieses Ziel ist zeitlich variabel aber beschreibt eine zu einem bestimmten Zeitpunkt festgelegte bzw. festzulegende Situation (z.B. im Sommer anders als im Winter), die in Abhängigkeit von dem Ereignis eintreten darf oder beibehalten werden soll, damit das cyber-physische System das Ereignis gut überstehen kann.

Cyber-physische Systeme können auch von ganz anderen Ereignissen betroffen sein, z.B. im Bereich der Energieversorgung, bei denen dann ebenfalls ein Ziel ermittelt werden muss, um wenigstens eine Steuereinrichtung optimal zu steuern.

Die vorliegende Erfindung soll aber am Beispiel öffentlicher Wassersysteme näher beschrieben werden, um die Funktionsweise besser verständlich zu machen. Sie ist aber ausdrücklich nicht auf dieses Anwendungsgebiet beschränkt.

Das cyber-physische System in einem Wassereinzugsgebiet soll die Wassermenge der Wassersysteme innerhalb des cyber-physischen Systems steuern. Die Steuerung erfolgt mit Unterstützung einer elektronischen Datenverarbeitung und mit Unterstützung von Rechenprogrammen, die auf elektronischen Datenverarbeitungsgeräten installiert sind. Das Eintreten eines Ereignisses hat eine Folge für das cyber-physische System, die an unterschiedlichen geografischen Orten des cyber-technischen Systems zu unterschiedlichen Zeitpunkten auftritt. Es gibt z.B. einen Niederschlag in einer Region und die Wassermenge verteilt sich in den vorhandenen Wassersystemen und bewegt sich in diesen stromabwärts. Die Steuerung sollte also in solchen Fällen auch vorausschauend erfolgen, um weit stromaufwärts und/oder stromabwärts liegende Bauwerke lange vor dem lokalen Eintritt des Ereignisses dort zu steuern. Es können z.B. Aufnahmekapazitäten in Auffangbecken erhöht werden, indem Wasser abgelassen wird, oder es können Wehre geöffnet werden, um den Wasserdurchsatz zu regulieren, etc.

Bei der Optimierung ein oder mehrerer cyber-physischer Systeme liegt in der Regel eine sehr unterschiedliche und gelegentlich auch sehr komplexe Struktur von Teilproblemen vor, die auf dem Wege der Optimierung gelöst werden müssen, um die Optimierung zu erreichen. Es gibt also nicht nur ein Ziel, auf das hin optimiert werden kann, sondern es gibt in der Praxis sehr viele Ziele, die bei einer Optimierung eines oder mehrerer cyber-physischen Systeme berücksichtigt werden müssen. Bei der hier beschriebenen Ausführungsform mit Bezug zum Optimieren eines Wasserhaushalts ist in der Regel nicht ausschließlich ein Optimieren nur mit dem Ziel, ein Minimum oder Maximum eines Wasserstandes an einem bestimmten Ort des cyber-physischen Systems relevant sondern gleichzeitig auch ein Optimieren mit dem Ziel z.B. der Energiegewinnung (Wasserenergie) oder der Minimierung der Betriebskosten beim Einsatz von Pumpen und anderen Energieverbrauchern. Es gibt also in einem cyber-physischen System in der Regel kaskadierende Optimierungsprobleme, die sich zudem von Optimierungssystemen in anderen cyber-physischen Systemen auch noch unterscheiden. Damit solche cyber-physischen Systeme optimiert werden können, bedarf es bisher sehr vieler Variablen, die in Abhängigkeit der Anzahl von mitzuberücksichtigenden Teilprobleme stark ansteigen. Damit eine Optimierung im Stand der Technik durchgeführt werden kann, müssen also Maßnahmen getroffen werden, die Komplexität des Rechenprogramms zu beschränken. Das erfolgt in der Regel durch Vereinfachung der Teilprobleme. Solche Vereinfachungen führen aber auch zu ungenauen Ergebnissen. Die Qualität der Optimierung leidet unter solchen Vereinfachungen.

Die derzeit genutzten Rechenprogramme erfordern entweder eine sehr große Rechnerleistung, da die Berücksichtigung der großen Vielzahl von Variablen umfangreiche Rechenoperationen erforderlich machen, oder sind preiswert und schnell und nutzen heuristische Modelle zur Lösung des Problems. Heuristische Modelle sind aber keine Grundlage für eine bestmögliche Strategie zur Lösung des Problems.

Die Optimierung einer Steuereinrichtung oder einer Vielzahl von Steuereinrichtungen in einem solchen cyber-physischen System stellt also eine enorme Herausforderung für den Fachmann dar. Solche Optimierungen erfolgen, wie bereits ausgeführt, mit Unterstützung von Computern und Rechenprogrammen, die auf solchen Computern eingerichtet sind und Optimierungsprozesse berechnen. Grundlage für die Berechnung sind aber immer die aus den Messdaten des Ereignisses entwickelten digitalen Erstdaten oder Rohdaten.

Die Rechenvorgänge im Stand der Technik sind aufgrund der vorbeschriebenen Umstände sehr umfangreich und erfordern eine hohe Rechnerleistung und sind bis heute nicht für große Probleme anwendbar, die in kurzer Rechenzeit gelöst werden müssen, und verwenden bei vielen komplexen Anwendungen, wie z.B. bei der oben beschriebenen Anwendung der Wasserregulierung in cyber-physischen Systemen, mathematisch vereinfachte Betrachtungen oder aber nutzen heuristische Modelle, die keine Optimierung einer Lösung ermöglichen.

Gegenwärtig werden solche Rechenvorgänge in Abhängigkeit von priorisierten Zielen durchgeführt.

Ein Beispiel dafür ist aus US 9,946,972 B2 bekannt.

Zuerst wird ein Ziel mit der höchsten Priorität, z.B. Priorität 1, gelöst. Dann wird ein neues Teiloptimierungsproblem mit dem Ziel der nächsthöchsten Priorität, Priorität 2, unter einer zusätzlichen Nebenbedingung bearbeitet, die verlangt, dass das Zielergebnis der Priorität 1 nicht schlechter werden kann als das, welches bei der Teiloptimierung der Priorität 1 erreicht wurde. Dann wird ein neues Teiloptimierungsproblem mit dem Ziel der nächsthöchsten Priorität 3 bearbeitet, die dann zwei Nebenbedingungen hat, die verlangen, dass das Zielergebnis dieser neuen Teiloptimierung nicht schlechter werden kann, als das der beiden vorhergehenden Teiloptimierungen aus den Prioritäten 1 und 2, etc.. Auf diese Weise werden die priorisierten Ziele in der Reihenfolge ihrer Priorität, bis zu einer letzten Priorität schrittweise optimiert.

Der Stand der Technik ist hier ein Algorithmus, der lexikographische Zielprogrammierung genannt wird. Diese Technik nutzt sogenannte Epsilon-Constraints, um Variablen zu erzeugen, die einen von Null verschiedenen Wert haben, wenn ein Ziel (z.B. Niveau zwischen min. und max.) verletzt wird, und ansonsten Null sind.

Die Aufgabe der vorliegenden Erfindung ist daher, das eingangs genannte System dahin gehend weiterzubilden, dass die für eine optimale Steuerung zum Erhalt eines globalen Optimums erforderlichen Daten mit weniger umfangreichen Rechenvorgängen und ohne mathematische Vereinfachung in sehr viel kürzerer Zeit als bisher erfolgen, um eine schnelle Verarbeitung ereignisabhängiger Daten in relativ kurzer Zeit durchführen und einer Steuereinrichtung zur Verfügung stellen zu können.

Die Aufgabe wird erfindungsgemäß dadurch gelöst, dass jedes Ziel aus der Liste priorisierter Ziele als Zielfunktion erfasst wird, wobei jede Zielfunkton aus wenigstens zwei Teilen besteht, von denen ein erster Teil ein direktes Erfassen des Zieles betrifft und ein zweiter Teil eine Bedingung beschreibt, unter der jedes Ergebnis einer der vorhergehenden Ziele jedes der vorhergehenden Teiloptimierungsprobleme im Wesentlichen nicht negativ beeinflusst wird.

Mit der vorliegenden Erfindung ist es möglich, die Anzahl von Variablen eines Optimierungsproblems nicht steigen zu lassen, wie dies zum Beispiel bei einer Rechenoperation des Standes der Technik der Fall wäre. In einer Zielfunktion einen ersten und einen zweiten Teil vorzusehen, hat den Vorteil, dass nicht länger Nebenbedingungen benötigt werden, um die multikriterielle Optimierung zu implementieren. Solche Nebenbedingungen behindern die Suche nach einem globalen Optimum.

Ein Vorteil der Aufteilung von priorisierten Teiloptimierungsproblemen in Kleinstprobleme ist, dass wenigsten einige der Kleinstprobleme parallel abgearbeitet werden können.

Weitere Vorteile der vorliegenden Erfindung ergeben sich aus den weiteren Merkmalen der Unteransprüche.

Eine bevorzugte Ausführungsform der vorliegenden Erfindung wird im Folgenden näher beschrieben. Die Beschreibung der bevorzugten Ausführungsform dient in üblicher Weise nur dazu, die Erfindung an einem Beispiel zu erläutern. Die vorliegende Erfindung wird dadurch nicht auf dieses Beispiel beschränkt. Vielmehr sind von der vorliegenden Erfindung alle Ausführungen umfasst, die durch die Ansprüche abgedeckt sind.

Im Sinne der vorliegenden Erfindung ist mit einem multikriteriellen Optimierungsproblem eine priorisierte Liste von Optimierungszielen gemeint. Mit Ziel oder Optimierungsziel ist entweder die Maximierung oder Minimierung einer Funktion oder das bestmögliche Einhalten ein oder mehrerer Ungleichheiten gemeint, wobei die Ungleichheiten auch auf einer Funktion basieren. Der Begriff "Fortsetzungsparameter" steht in der vorliegenden Erfindung für die kontinuierliche Veränderung zwischen einer Vereinfachung eines ursprünglichen Problems und dem ursprünglichen Problem. Zum Beispiel gehören die Barriereparameter des Innere-Punkte-Verfahrens und auch Homotopieparameter, die zwischen vereinfachten und komplexen physikalischen Modellen interpolieren, zu Fortsetzungsparametern.

Die Erfindung findet in der bevorzugten Ausführungsform Anwendung in Wassersystemen und wird daher im Folgenden in Bezug darauf näher beschrieben. Sie ist aber auch in anderen cyber-physischen Systemen einsetzbar und ausdrücklich nicht auf Wassersysteme und Wasserwirtschaftssysteme beschränkt. In der Regel sollen Wasserwirtschaftssysteme in Bezug auf mehrere Ziele optimiert werden: Die Betreiber wollen den Wasserstand in einem Stausee z.B. zwischen den angestrebten Minimum- und Maximum-Wasserständen halten, gleichzeitig aber die Energiegewinnung aus Wasserkraft maximieren. Diese Ziele können miteinander in Konflikt stehen, da es aus Sicht der Energiegewinnung vorteilhaft sein kann, den Wasserspiegel zunächst über den Maximalpegel hinaus ansteigen zu lassen und dann unter den Minimalpegel abzusenken.

Gleichzeitig ist es einem solchen Wasserwirtschaftssystem physikalisch nicht immer möglich, den Wasserstand zwischen dem gewünschten Minimum- und Maximum-Wert zu halten. Beispielsweise ist es in einer Phase der Trockenheit nicht immer möglich, den Minimalpegel zu halten. Der Wasserspiegel sinkt dann unter den Minimalpegel. In einer Phase, in der viel Niederschlag oder eine starke Schneeschmelze vorliegt, entsteht Hochwasser und der Maximalpegel kann dann nicht immer eingehalten werden. Das Min-/Max-Problem selbst ist daher auch ein Optimierungsproblem.

In solchen Szenarien haben wir es mit einer priorisierten Kaskade von Optimierungsproblemen zu tun:
1. Erfüllung von Umweltauflagen (z.B. Min/Max-Werte)
2. Maximierung der wirtschaftlichen Ziele (Maximierung der Wasserkraftleistung, Minimierung der Pumpenergiekosten)

Diese Liste könnte zu einer Liste mit beliebig vielen priorisierten Zielen verfeinert werden, wobei die Priorisierung veränderbar ist. Für Verkehrssysteme könnten Zielkonflikte die Minimierung der Reisezeit für Autofahrer und die Minimierung der CO2-Emissionen sein.

Das erfindungsgemäße System zur Lösung eines ereignisabhängigen multikriteriellen Optimierungsproblems wenigstens eines cyber-physischen Systems umfasst eine Steuereinrichtung zum Steuern des wenigstens einen cyber-physischen Systems. Eine solche Steuereinrichtung kann ein Rechner, ein mobiles Endgerät oder ein beliebiges Gerät sein, dass eine elektronische Recheneinheit umfasst und entweder ein übliches Speichermedium umfasst oder auf dieses zugreifen kann. Die Steuereinrichtung kann kabelgebunden und/oder drahtlos arbeiten. Im Rahmen der vorliegenden Erfindung steuert die Steuereinrichtung das cyber-physische System in Abhängigkeit von einer Liste priorisierter Ziele, die in dem Speichermedium angelegt ist und löst dabei wenigstens ein ereignisabhängiges Teiloptimierungsproblem.

Jedes Ziel aus der Liste priorisierter Ziele wird von der Steuereinrichtung als Zielfunktion erfasst, wobei in einer Ausführungsform wenigstens eine zweiteilige Zielfunkton von wenigstens einem Fortsetzungsparameter abhängig sein kann und/oder wenigstens eine Nebenbedingung für die Optimierung von wenigstens einem Fortsetzungsparameter abhängig ist. Dabei handelt es sich um Nebenbedingungen, die unabhängig von der Liste priorisierter Ziele sind.

Gemäß der vorliegenden Erfindung soll jedes Ziel aus der Liste priorisierter Ziele als Zielfunktion erfasst werden, wobei jede Zielfunkton aus wenigstens zwei Teilen besteht, von denen ein erster Teil ein direktes Erfassen des Zieles betrifft und ein zweiter Teil eine Bedingung beschreibt, unter der jedes Ergebnis einer der vorhergehenden Zielfunktionen jedes der vorhergehenden Teiloptimierungsprobleme im Wesentlichen nicht negativ beeinflusst wird.

In der bevorzugten Ausführungsform der vorliegenden Erfindung, betrifft der ein direktes Erfassen des Zieles betreffende erste Teil jeder der Zielfunktionen auch ein Erfassen eines Zieles, das durch eine Ungleichheitsbedingung beschrieben werden kann. In anderen Ausführungsformen muss das nicht der Fall sein. Es kann in der bevorzugten Ausführungsform günstig sein, dass wenigstens eine der Ungleichheitsbedingungen unter Verwendung einer Minimum- oder Maximum-Funktion erfasst wird. In anderen Ausführungsformen muss das nicht der Fall sein.

In einer Alternative zu der bevorzugten Ausführungsform der vorliegenden Erfindung betrifft der ein direktes Erfassen des Zieles betreffende erste Teil jeder der Zielfunktionen auch ein Erfassen eines Zieles, das durch eine Minimierung oder Maximierung einer Funktion beschrieben werden kann. In anderen Ausführungsformen muss das nicht der Fall sein.

In der bevorzugten Ausführungsform wird im zweiten Teil jeder der Zielfunktionen die Bedingung, dass jedes Ergebnis einer der vorhergehenden Ziele jedes der vorhergehenden Teiloptimierungsprobleme im Wesentlichen nicht negativ beeinflusst wird, unter Verwendung einer Minimum- oder Maximum-Funktion oder, alternativ, unter Verwendung einer geglätteten Minimum- oder Maximum-Funktion erfasst. In anderen Ausführungsformen muss das nicht der Fall sein.

Die vorstehende Verwendung einer Minimum- oder Maximum-Funktion oder einer geglätteten Minimum- oder Maximum-Funktion ist Teil einer bevorzugten Ausführungsform. Von der vorliegenden Erfindung sollen aber auch Alternativen dazu umfasst sein, die in anderen Ausführungsformen Verwendung finden können.

So kann anstelle der Minimum- und/oder Maximumfunktion wenigstens einer der der folgenden mathematischen Ausdrücke verwendet werden:
- Heaviside-Funktion
- Dirac-Delta-Funktion
- jede Sigmoid-Funktion (es gibt mehrere Varianten)
- Funktionen, die von einer oder mehreren "Bedingten Anweisungen"/Bedingungsausdrücken abhängen oder
   - geglättete Versionen dieser Ausdrücke oder
- beliebige Ausdrücke, ob geglättet oder nicht, die in irgendeiner Weise versuchen, "if/else" oder "sigmoides" Verhalten zu replizieren oder ein solches Verhalten enthalten.

In der bevorzugten Ausführungsform rechnet die Steuereinrichtung mit einem Rechenprogramm, das die den Prioritäten zugeordneten Teiloptimierungsprobleme mit einem Fortsetzungsverfahren löst. Für den Rechenvorgang wird jedes Teiloptimierungsproblem in eine Mehrzahl von Kleinstproblemen zerlegt, wobei die Kleinstprobleme festgelegte Fortsetzungswerte haben. Durch die Zerlegung wenigstens einiger der Teiloptimierungsprobleme in Kleinstprobleme können einige der Kleinstprobleme parallel abgearbeitet werden. In anderen Ausführungsformen muss das nicht der Fall sein.

Wenn zum Beispiel in der bevorzugten Ausführungsform mehrere Kleinstprobleme von einem einzigen Teiloptimierungsproblem abhängen, dann können diese Kleinstprobleme parallel ausgeführt werden, sobald das Teiloptimierungsproblem abgearbeitet ist.

Für die vorliegende Erfindung sind Algorithmen geeignet, die nach den drei vorstehend genannten Punkten arbeiten, und insbesondere Algorithmen, die Berechnungen von (un)abhängigen Kombinationen über mehrere (Hyper)Threads, CPU-Kerne, CPUs oder Computer hinweg parallelisieren.

Die vorliegende Erfindung wurde als System beschrieben. Sie kann in gleicher Weise auch in einem Verfahren zum Einsatz kommen. Das erfindungsgemäße System oder Verfahren kann auch in einen Rechner, z.B. in ein mobiles Endgerät implementiert sein.

## Patentansprüche

1. System zur Lösung eines ereignisabhängigen multikriteriellen Optimierungsproblems wenigstens eines cyber-physischen Systems mit einer Steuereinrichtung zum Steuern des wenigstens einen cyber-physischen Systems, wobei die Steuereinrichtung das cyber-physische System in Abhängigkeit von einer Liste priorisierter Ziele unter Lösung wenigstens eines ereignisabhängigen Teiloptimierungsproblems steuert,
**dadurch gekennzeichnet,**
**dass** jedes Ziel aus der Liste priorisierter Ziele als Zielfunktion erfasst wird, wobei jede Zielfunkton aus wenigstens zwei Teilen besteht, von denen ein erster Teil ein direktes Erfassen des Zieles betrifft und ein zweiter Teil eine Bedingung beschreibt, unter der jedes Ergebnis einer der vorhergehenden Ziele jedes der vorhergehenden Teiloptimierungsprobleme im Wesentlichen nicht negativ beeinflusst wird.

2. System nach Anspruch 1,
**dadurch gekennzeichnet,**
**dass** der erste Teil, der ein direktes Erfassen des Zieles betrifft, auch ein Erfassen eines Zieles betrifft, das durch eine Ungleichheitsbedingung beschrieben werden kann.

3. System nach Anspruch 1,
**dadurch gekennzeichnet,**
**dass** der erste Teil, der ein direktes Erfassen des Zieles betrifft, auch ein Erfassen eines Zieles betrifft, das durch eine Minimierung oder Maximierung einer Funktion beschrieben werden kann.

4. System nach einem der Ansprüche 2,
**dadurch gekennzeichnet,**
**dass** wenigstens eine der Ungleichheitsbedingungen unter Verwendung einer Minimum- oder Maximum-Funktion erfasst wird.

5. System nach Anspruch 2,
**dadurch gekennzeichnet,**
**dass** wenigstens eine der Ungleichheitsbedingungen unter Verwendung einer geglätteten Minimum- oder Maximum-Funktion erfasst wird.

6. System nach einem der vorstehenden Ansprüche,
**dadurch gekennzeichnet,**
**dass** im zweiten Teil, die Bedingung, dass jedes Ergebnis einer der vorhergehenden Ziele jedes der vorhergehenden Teiloptimierungsprobleme im Wesentlichen nicht negativ beeinflusst wird, unter Verwendung einer Minimumoder Maximum-Funktion erfasst wird.

7. System nach einem der Ansprüche 1 bis 5,
**dadurch gekennzeichnet,**
**dass** im zweiten Teil, die Bedingung, dass jedes Ergebnis einer der vorhergehenden Ziele jedes der vorhergehenden Teiloptimierungsprobleme im Wesentlichen nicht negativ beeinflusst wird, unter Verwendung einer geglätteten Minimum- oder Maximum-Funktion erfasst wird.

8. System nach einem der vorstehenden Ansprüche,
**dadurch gekennzeichnet,**
**dass** wenigstens eine der Zielfunktionen von wenigstens einem Fortsetzungsparameter abhängig ist.

9. System nach einem der vorstehenden Ansprüche,
**dadurch gekennzeichnet,**
**dass** auch wenigstens eine Nebenbedingung für die Optimierung von wenigstens einem Fortsetzungsparameter abhängig ist.

10. System nach Anspruch 8 oder 9,
**gekennzeichnet durch**
ein Rechenprogramm, das die den Prioritäten zugeordneten Teiloptimierungsprobleme mit einem Fortsetzungsverfahren löst.

11. System nach Anspruch 10,
**dadurch gekennzeichnet,**
**dass** jedes Teiloptimierungsproblem in eine Mehrzahl von Kleinstproblemen zerlegt wird, wobei die Kleinstprobleme festgelegte Fortsetzungswerte haben.

12. System nach Anspruch 11,
**dadurch gekennzeichnet,**
**dass** wenigstens einige der Kleinstprobleme parallel abgearbeitet werden.

13. Elektronisches Datenverarbeitungsgerät, auf dem ein computerlesbares Rechenprogramm installiert ist, in welches das System nach einem der Ansprüche 1 bis 12 implementiert ist.

14. Computerprogrammprodukt mit einem computerlesbaren Speichermedium, auf dem ein computerlesbares Rechenprogramm gespeichert ist, in welches das System nach einem der Ansprüche 1 bis 12 implementiert ist, wobei das computerlesbare Rechenprogramm, wenn es auf einem elektronischen Datenverarbeitungsgerät ausgeführt wird, das elektronische Datenverarbeitungsgerät dazu veranlasst, das System nach einem der Ansprüche 1 bis 12 bei einem Rechenvorgang anzuwenden.
